# EUROPEAN PATENT SPECIFICATION

(11) **EP 2 602 974 B1**
(45) Date of publication and mention of the grant of the patent: **14.05.2014**
(21) Application number: 12193648.8
(22) Date of filing: 21.11.2012
(51) Int. Cl.: H04M 1/02

(54) **Folder type mobile communication system and the hinge apparatus installed thereto**
Zusammenklappbares mobiles Kommunikationssystem und die daran installierte Scharniervorrichtung
Système de communication mobile de type pliant et l'appareil à charnière installé sur celui-ci

(30) Priority: 07.12.2011 KR 20110129956
(43) Date of publication of application: 12.06.2013
(73) Proprietor: Samsung Electronics Co., Ltd, Gyeonggi-do 443-742 (KR)
(72) Inventor: Kim, Jiyong, 443-742 Gyeonggi-do (KR); Nam, In, 443-742 Gyeonggi-do (KR)
(74) Representative: Birchenough, Lewis

(56) References cited:
- EP-A2- 1 382 785
- EP-A2- 1 505 800
- US-A1- 2011 267 785

## Description

### BACKGROUND OF THE INVENTION

### 1. Field of the Invention:

The present invention relates to a mobile communication system. More particularly, the present invention relates to a folder type mobile communication system and a hinge apparatus installed thereto.

### 2. Description of the Related Art:

Mobile communication systems are equipped with a variety of functions and provide various services. Mobile communication systems are classified according to their respective shapes. For example, mobile communication systems may be classified as a bar type, a flip type, a folder type, a slide type, and the like. A folder type mobile communication system includes a main body, a folder unit, and a hinge apparatus connecting the main body and the folder unit. The hinge apparatus connects the main body and the folder unit in such a way that the main body and the folder unit can rotate in the direction towards or away from each other.

Mobile communication systems include antennas, and perform RF communication with external systems via the antennas. The RF communication performance depends on the antenna radiation characteristics. The optimization of the antenna radiation characteristics in mobile communication systems is subject to the ground performance of antenna. For example, if the antennas of mobile communication systems have over a certain level of grounding performance, the antenna radiation characteristics can be optimized.

Therefore, a need exists for folder type mobile communication system with enhanced grounding performance of an antenna so as to improve the antenna radiation characteristics.

European patent application EP1382785, European patent application EP1505800 and US patent application US2011/267785 each concern arrangements for grounding elements of a folder-type communications device. The European applications both describe devices having main and folder portions with respective grounding portions. In EP 1505800, the hinge module is grounded on the ground portion of the main module (first PCB) by a direct hinge contact means. US2011/267785 on the other hand concerns an arrangement where the cover (in which a display module is located) is grounded at the grounding plane of a main part via the hinge module.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address the above-mentioned problems and/or disadvantages and to provide at least the advantages described below. Accordingly, an aspect of the present invention is to provide a technology to enhance the grounding performance of antenna so that antenna radiation characteristics can be optimized.

In accordance with an aspect of the present invention, a mobile communication system is provided. The system includes a folder part including a display module, a main part including a main module having a ground part, and a hinge module, installed to the folder part and pivotally coupled to the main part, thereby serving to allow the folder part to rotate towards or away from the main part; wherein the display module and the main module are electrically connected to each other and the ground part of the main module electrically grounds the display module and wherein the display module (123) is electrically connected to the hinge module (133), the hinge module (133) being grounded at the ground part of the main module (113) via the respective electrical connections between hinge module and display module and between the display module and the main module.

In accordance with another arrangement, a hinge apparatus installed to a mobile communication system is provided. The apparatus includes a folder part including a display module and a main part including a main module electrically grounding the display module, the hinge apparatus including: a hinge module, installed to the folder part and pivotally coupled to the main part, for rotating the folder part towards or away from the main part; and a metal connector for electrically connecting the display module to the hinge module so that the hinge module is electrically grounded via the main module.

In accordance with another arrangement, a mobile terminal is provided. The mobile terminal includes a folder part configured to have a display module installed therein, a main part comprising a main module electrically connected to and electrically grounding the display module, and a hinge module operatively connected to the folder part and the main part, the hinge module configured for selectively rotating the folder part towards or away from the main part and for electrically grounding the display module via the main module.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will become more apparent from the following description taken in conjunction with the accompanying drawings, in which:
FIGs. 1A and 1B illustrate perspective view of a mobile communication system according to an exemplary embodiment of the present invention;
FIG. 2 illustrates a schematic block diagram of a mobile communication system according to the related art, showing components thereof electrically connected to each other;
FIG. 3 illustrates a schematic block diagram of a mobile communication system according to an exemplary embodiment of the present invention, showing components thereof electrically connected to each other;
FIG. 4 illustrates a view to show an electrical connection in a mobile communication system according to an exemplary embodiment of the present invention;
FIGs. 5A and 5B illustrate cross-sectional views of a hinge apparatus according to an exemplary embodiment of the present invention;
FIG. 6A illustrates graphs of radiation characteristics of a mobile communication system according to the related art; and
FIG. 6B illustrates graphs of the radiation characteristics of a mobile communication system according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

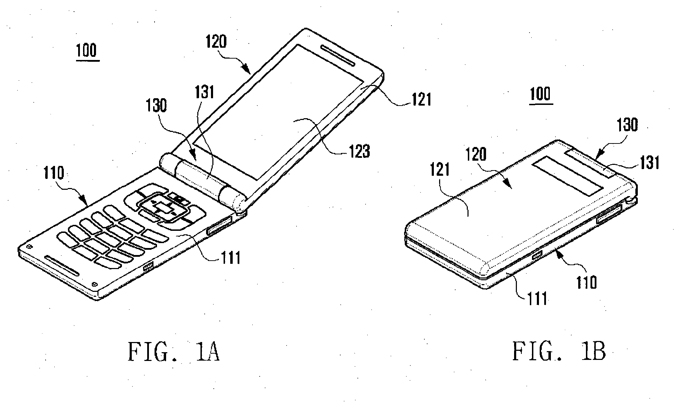

FIGs. 1A and 1B illustrate perspective views of a mobile communication system according to an exemplary embodiment of the present invention. FIG. 1A shows the mobile communication system in an open state, and FIG 1B shows the mobile communication system in a closed state.

Referring to FIGs. 1A and 1B, it is assumed that the exemplary embodiments of the present invention are implemented using a folder type mobile communication system, which is hereinafter called a mobile communication system for the sake of convenience. The mobile communication system 100 includes a main part 110, a folder part 120, and a hinge apparatus 130.

The main part 110 includes a main housing 111 and a main module 113 (not shown in FIGs. 1A and 1B). The main housing 111 receives the main module 113 and protects it. The main module 113 controls the operations of the mobile communication system 100. The main module 113 may be a main board that includes a base board with a ground part and a number of devices installed on the base board. Examples of the devices are Integrated Circuit (IC) chips, memory devices, an antenna, and the like. The base board may be a Printed Circuit Board (PCB).

The folder part 120 includes a folder housing 121 and a display module 123. The folder housing 121 receives the display module 123 and protects it. The display module 123 displays videos under the control of the main module 113. The display module 123 may be implemented with a Liquid Crystal Display (LCD) and the like.

The hinge apparatus 130 is place between the main part 110 and the folder part 120 and pivotally connects them. The hinge apparatus 130 includes a hinge case 131 and a hinge module 133. The hinge case 131 is installed to the folder part 120. The hinge case 131 is attached to the surface of the hinge module 133 and protects it. According to exemplary embodiments of the present invention, the hinge module 133 is pivotally connected to the main part 110. For example, the hinge module 133 serves to rotate the folder part 120 towards or away from the main part 110. According to exemplary embodiments of the present invention, the hinge module 133 is made of a metal material.

If the folder part 120 is positioned so as to be away from the main part 110 as shown in FIG. 1A, it is assumed that the mobile communication system 100 is in an open state. Likewise, if the folder part 120 is folded towards the main part 110 as shown in FIG. 1B, it is assumed that the mobile communication system 100 is in a closed state.

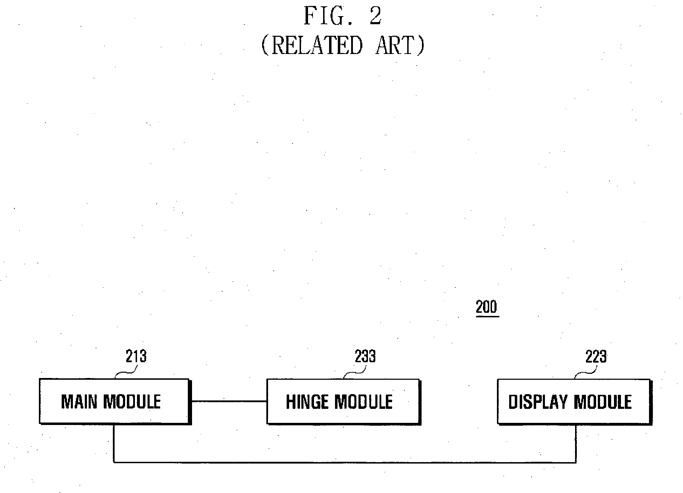

FIG. 2 illustrates a schematic block diagram of a mobile communication system according to the related art, showing components thereof electrically connected to each other.

Referring to FIG. 2, the mobile communication system 200 according to the related art is configured in such a way that the main module 213 and the display module 223 are electrically connected to each other. The main module 1213 controls the display module 223 to display videos. The display module 223 is grounded via the main module 213. In addition, the main module 213 is electrically connected to the hinge module 233. The hinge module 233 is grounded via the main module 213. For example, the ground part of the main module 213 provides a common ground connection to the antenna, the display module 223, and the hinge module 233.

The hinge module 233 is installed to the folder part (not shown) and coupled to the main part (not shown). However, because the hinge module 233 is installed to the folder part and coupled to the main part, an electrical connection failure may occur between the hinge module 233 and the main module 213. For example, because the hinge apparatus is rotated according to the operation of the main part, the hinge module 233 may be separated from the main module 213, thereby causing an electrical connection failure therebetween. If the hinge module 233 is not electrically connected to the main module 213, the hinge module 233 is not grounded via the main module 213. This deteriorates the grounding performance in the mobile communication system, and thus degrades the antenna radiation characteristic.

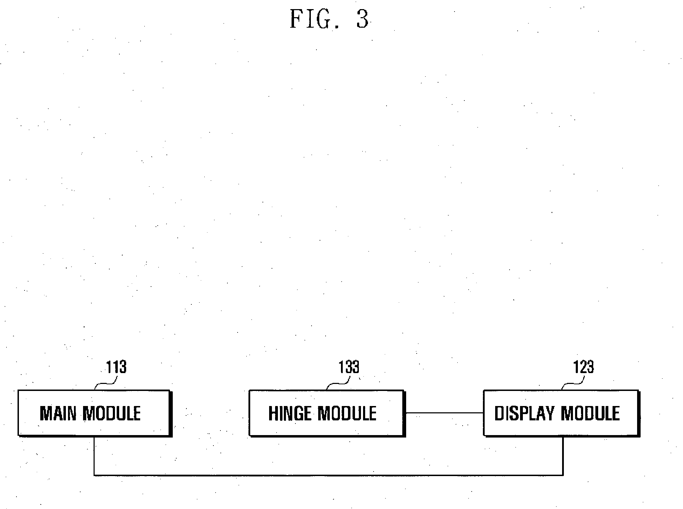

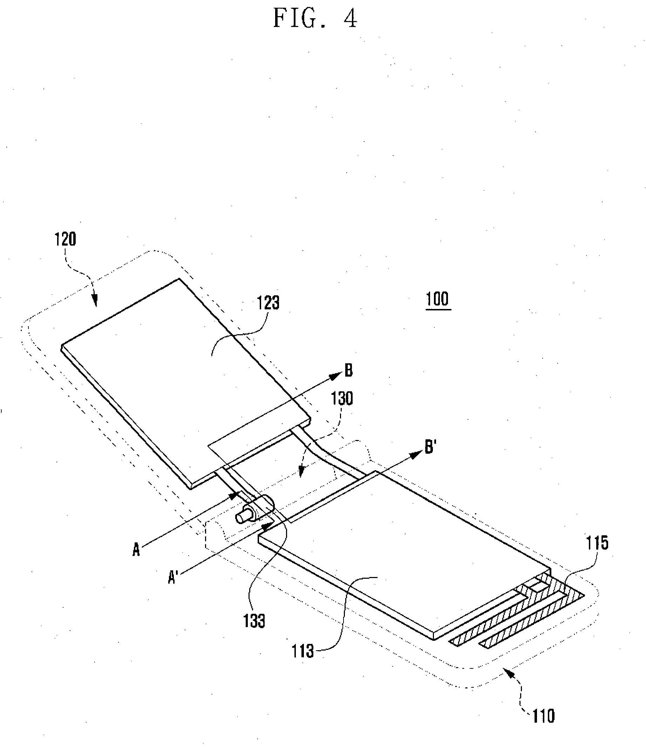

FIG. 3 illustrates a schematic block diagram of a mobile communication system according to an exemplary embodiment of the present invention, showing components thereof electrically connected to each other. FIG. 4 illustrates a view to show an electrical connection in a mobile communication system according to an exemplary embodiment of the present invention.

Referring to FIGs. 3 and 4, the mobile communication system 100 is configured in such a way that the main module 113 and the display module 123 are electrically connected to each other. The main module 113 controls the display module 123 to display videos. The display module 123 is grounded via the main module 113. In addition, the display module 123 is electrically connected to the hinge module 133. The hinge module 133 is electrically connected to the main module 113 via the display module 123. The hinge module 133 is grounded via the main module 113. For example, the ground part of the main module 113 provides a common ground connection to the antenna, the display module 123, and the hinge module 133.

Therefore, because the hinge module 133 is installed to the folder part 120 and coupled to the main part 110, an electrical connection is maintained between the hinge module 133 and the main module 113. Although the hinge apparatus 130 is rotated according to the operation of the main part 110, the hinge module 133 is electrically connected to the display module 123. This maintains an electrical connection between the display module 123 and the main module 113. Because the hinge module 133 is electrically connected to the main module 113, it can be grounded via the main module 113. For example, the ground part of the main module 113 provides a common ground connection to the antenna 115, the display module 123, and the hinge module 133. Therefore, the mobile communication system 100 can enhance the grounding performance and thus optimize the antenna radiation characteristic.

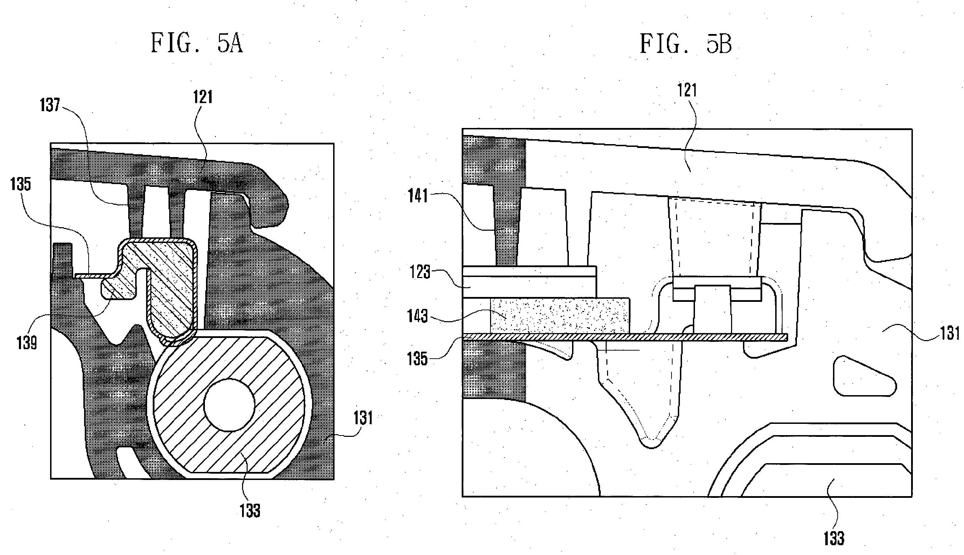

FIGs. 5A and 5B illustrate cross-sectional views of a hinge apparatus according to an exemplary embodiment of the present invention.FIG. 5A illustrates a cross-sectional view of a hinge apparatus taken along line A-A.FIG. 5B illustrates a cross-sectional view of a hinge apparatus taken along line B-B.

Referring to FIGs. 5A and 5B, the hinge apparatus 130 is installed between the main part 110 and the folder part 120 and pivotally connects the main part 100 and the folder part 120. The hinge apparatus 130 includes a hinge case 131, a hinge module 133, a metal connector 135, a contact rib 137, a contact member 139, a fix rib 141, and a connection gasket 143.

According to exemplary embodiments of the present invention, the hinge case 131 is installed to the folder part 120. The hinge case 131 is attached to the surface of the hinge module 133 and protects it. According to exemplary embodiments of the present invention, the hinge case 131 is made of the same material as the folder housing 121.

The hinge module 133 is installed to the folder part 120 and pivotally coupled to the main part 110. The hinge module 133 serves to rotate the folder part 120 towards or away from the main part 110. The hinge module 133 is made of a metal material.

According to exemplary embodiments of the present invention, the hinge module 133 includes a hinge housing (not shown), a hinge cam (not shown), a hinge shaft (not shown), and a hinge spring (not shown). The hinge housing is coupled to the folder part 120 of the mobile communication system 100. The hinge housing receives the hinge cam, the hinge shaft, and the hinge spring. The hinge cam protrudes from the hinge housing and is fixedly coupled to the main part 110. The hinge shaft is coupled to the hinge cam. The hinge shaft is rotated according to the rotation of the hinge cam in the hinge housing. The hinge spring is installed between the shaft and the hinge housing. The hinge spring exerts the elastic force between the hinge cam and the hinge shaft.

When the folder part 120 is rotated towards or away from the main part 110 with respect to the hinge apparatus, the hinge housing is also rotated according to the rotation of the hinge housing. In that case, the hinge shaft is also rotated according to the rotation of the hinge cam in the hinge housing. The hinge shaft is coupled to the hinge cam via the hinge spring in the hinge housing. Although the hinge shaft is rotated according to the rotation of the hinge cam, it is coupled to the hinge cam via the hinge spring.

The metal connector 135 electrically couples the hinge module 133 to the display module 123. The metal connector 135 is placed in the folder housing 121 of the folder part 120 and contacts the hinge module 133 and the display module 123 respectively. The metal connector 135 transfers an electrical signal, received via the hinge module 133, to the display module 123. The metal connector 135 is made of a metal material. The metal connector 135 is bent to form empty space. The metal connector 135 is bent to contact the contact rib 137 and the hinge module 133 respectively.

The contact rib 137 closely contacts the metal connector 135 to the hinge module 133. The contact rib 137 protrudes from the folder housing 121 and contacts the metal connector 135. Because the contact rib 137 closely contacts the metal connector 135 to the hinge module 133, the metal connector 135 is fixed between the contact rib 137 and the hinge module 133. The contact rib 137 electrically connects the hinge module 133 and the metal connector 135. The contact rib 137 may be made of the same material as the folder housing 121. In that case, the contact rib 137 may be integrally formed with the folder housing 121 via an injection molding method. Alternatively, the contact rib 137 may be made of a material that differs from that of the folder housing 121. In that case, the contact rib 137 may first be formed via an injection molding method, and then coupled to the folder housing 121.

The contact member 139 closely contacts the metal connector 135 to the hinge module 133. The contact member 139 is placed in the empty space created as the metal connector 135 is bent. The metal connector 135 forms the empty space when it is bent to contact the contact rib 137 and the hinge module 133. The contact member 139 provides the elastic force to closely contact the metal connector 135 to the hinge module 133. In that case, the metal connector 135 is fixed between the contact rib 137 and the hinge module 133. The contact member 139 electrically connects the hinge module 133 and the metal connector 135. The contact member 139 may be made of a rubber material.

The fix rib 141 closely contacts the display module 123 to the metal connector 135. The fix rib 141 protrudes from the folder housing 121 to the inner empty space and contacts the display module 123. Because the fix rib 141 closely contacts the display module 123 to the metal connector 135, the display module 123 is fixed between the fix rib 141 and the metal connector 135. The fix rib 141 electrically connects the display module 123 and the metal connector 135. The fix rib 141 may be made of the same material as the folder housing 121. In that case, the fix rib 141 may be integrally formed with the folder housing 121 via an injection molding method. Alternatively, the fix rib 141 may be made of a material that differs from that of the folder housing 121. In that case, the fix rib 141 may first be formed via an injection molding method, and then coupled to the folder housing 121.

The connection gasket 143 closely contacts the display module 123 to the metal connector 135. The connection gasket 143, placed between the display module 123 and the metal connector 135, connects the display module 123 and the metal connector 135. The connection gasket 143 is compressed or restored according to the operation of the fix rib 141. The connection gasket 143 may be implemented with an elasticity sponge. The connection gasket 143 electrically connects the display module 123 and the metal connector 135. In that case, the connection gasket 143 may be implemented with a conductive tape.

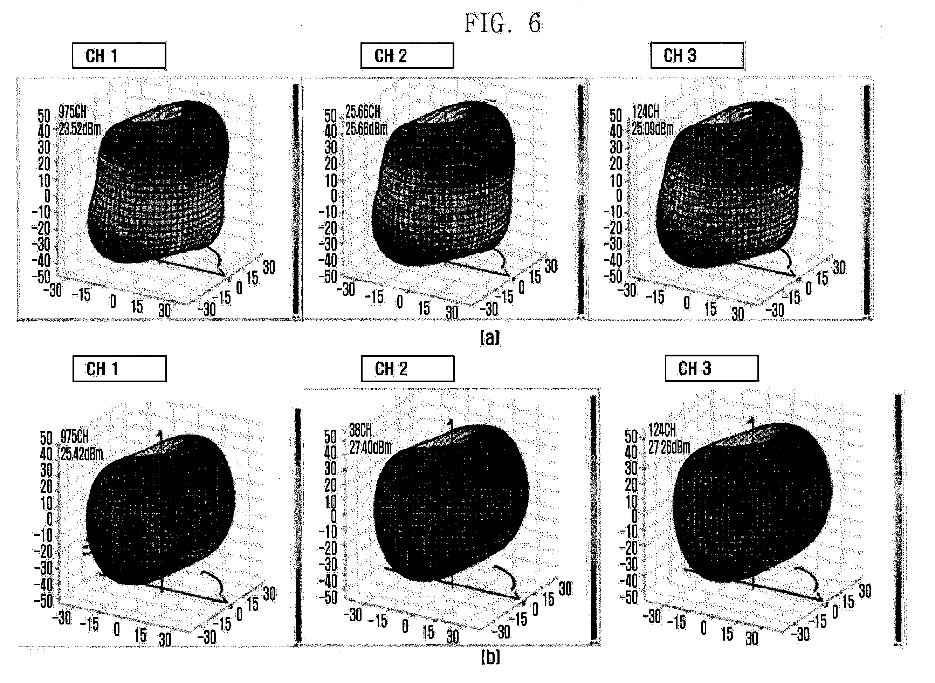

FIG. 6A illustrates graphs of radiation characteristics of a mobile communication system according to the related art, and FIG. 6B illustrates graphs of radiation characteristics of a mobile communication system according to an exemplary embodiment of the present invention. Channels 1, 2, and 3 denote different frequency bands.

Referring to FIGs. 6A and 6B, the distribution of color in the graphs as shown in FIG. 6B is more uniform than those shown in FIG. 6A. The more uniform color distribution illustrated in FIG. 6B means that the mobile communication system 100 according to exemplary embodiments of the present invention enhances the antenna radiation characteristic because, in contrast to the mobile communication system according to the related art, the mobile communication system 100 is configured in such a way that the hinge module 133 is grounded to the main module 113 via the display module 123. When the mobile communication system 100 is in an open state, the following Table 1 shows that it enhances the Total Radiated Power (TRP) and Total Isotropic Sensitivity (TIS) by approximately 1.9 ~ 2.74 dB. For example, the mobile communication system 100 according to the invention optimizes the radiation characteristic of the antenna 115, compared with the conventional system.

**Table 1**

| | | CH 1 | CH 2 | CH 3 |
|---|---|---|---|---|
| Mobile Communication System According to Related Art | TRP[dBm] | 23.52 | 25.66 | 25.09 |
| | TIS[dBm] | -100.07 | -100.80 | -101.32 |
| Mobile Communication System according to exemplary embodiments of the present invention | TRP[dBm] | 25.42 | 27.40 | 27.26 |
| | TIS[dBm] | -102.52 | -103.54 | -104.05 |

The mobile communication system 100 according to exemplary embodiments of the present invention is configured in such a way that the hinge module 133 is installed to the folder part 120 and coupled to the main part 110 and thus the electrical connection is maintained between the hinge module 133 and the main module 113. Although the hinge apparatus 130 is rotated with respect to the main part 110, the electrical connection is maintained between the hinge module 133 and the display module 123 and also between the display module 123 and the main module 113. Because the hinge module 133 is electrically connected to the main module 113, the hinge module 133 is grounded via the main module 113. For example, the ground part of the main module 113 provides a common ground connection to the antenna 115, the display module 123, and the hinge module 133. This configuration contributes to the optimization in the radiation characteristic of the antenna 115 in the mobile communication system 100.

As described above, the hinge apparatus according to exemplary embodiments of the present invention is configured in such a way that the hinge module is electrically connected to the main module, so that the hinge module is grounded via the main module. For example, the hinge module is grounded via the grounding unit of the main module, as a command ground. Therefore, the hinge apparatus installed to a folder type mobile communication system can enhance the grounding performance, and this configuration accordingly contributes to the optimization in the antenna radiation characteristic.

While the invention has been shown and described with reference to certain exemplary embodiments thereof, it will be understood by those skilled in the art that various changes in form and details may be made therein without departing from the scope of the invention as defined in the appended claims and their equivalents.

## Claims

1. A mobile communication system comprising:
a folder part (120) comprising a display module (123);
a main part (110) comprising a main module (113) having a ground part; and
a hinge module (133), installed to the folder part (120) and pivotally coupled to the main part (110), thereby serving to allow the folder part (120) to rotate towards or away from the main part (110);
wherein the display module (123) and the main module (113) are electrically connected to each other and the ground part of the main module (113) electrically grounds the display module (123); and
wherein the display module (123) is electrically connected to the hinge module (133), the hinge module (133) being grounded at the ground part of the main module (113) via the respective electrical connections between hinge module and display module and between the display module and the main module.

2. The mobile communication system of claim 1, wherein the folder part (120) further comprises:
a folder housing (121) comprising an inner empty space for receiving the display module (123); and
a metal connector (135) for providing the electrical connection between the display module (123) and the hinge module (133) in the inner empty space.

3. The mobile communication system of claim 2, wherein the folder part (120) further comprises:
a contact rib (137) for contacting the metal connector (135) to the hinge module (133), wherein the contacting rib (137) protrudes from the folder housing (121) to the inner empty space and contacts the metal connector (135).

4. The mobile communication system of claim 3, wherein the folder part (120) further comprises:
a contact member (139) for providing an elastic force to the metal connector (135) and for contacting the metal connector (135) to the hinge module (133), wherein the contact member (139) is placed in an empty space defined as the metal connector (135) is bent and wherein the contact member (139) respectively contacts the contact rib (137) and the hinge module (133).

5. The mobile communication system of claim 2, wherein the folder part (120) further comprises:
a fix rib (141) for fixing the display module (123) in the inner empty space, wherein the fix rib (141) protrudes from the folder housing (121) to the inner empty space and wherein the fix rib (141) contacts the display module (123).

6. The mobile communication system of claim 2, wherein the folder part (120) further comprises:
a connection gasket (143) for electrically connecting the display module (123) to the metal connector (135), wherein the connection gasket (143) is placed between the display module (123) and the metal connector (135) and wherein the connection gasket (143) connects the display module (123) and the metal connector (135).

## Patentansprüche

1. Mobilkommunikationssystem mit Folgendem:
einem Klappteil (120), der ein Displaymodul (123) umfasst,
einem Hauptteil (110), der ein Hauptmodul (113) mit einem Erdungsteil umfasst, und
ein Scharniermodul (133), das am Klappteil (120) installiert und verschwenkbar mit dem Hauptteil (110) gekoppelt ist, wodurch sich der Klappteil (120) zu dem Hauptteil (110) hin oder von diesem weg drehen lässt,
wobei das Displaymodul (123) und das Hauptmodul (113) elektrisch miteinander verbunden sind und der Erdungsteil des Hauptmoduls (113) das Displaymodul (123) elektrisch erdet und
wobei das Displaymodul (123) elektrisch mit dem Scharniermodul (133) verbunden, das Scharniermodul (133) an dem Erdungsteil des Hauptmoduls (113) über die jeweiligen elektrischen Verbindungen zwischen Scharniermodul und Displaymodul und zwischen dem Displaymodul und dem Hauptmodul geerdet ist.

2. Mobilkommunikationssystem nach Anspruch 1, bei dem der Klappteil (120) ferner Folgendes umfasst:
ein Klappgehäuse (121), das einen Innenleerraum für das Aufnehmen des Displaymoduls (123) umfasst, und
ein metallenes Verbindungsstück (135) zum Bereitstellen der elektrischen Verbindung zwischen dem Displaymodul (123) und dem Scharniermodul (133) in dem Innenleerraum.

3. Mobilkommunikationssystem nach Anspruch 2, bei dem der Klappteil (120) ferner Folgendes umfasst:
eine Kontaktrippe (137) zum Inkontaktbringen des metallenen Verbindungsstücks (135) mit dem Scharniermodul (133), wobei die Kontaktrippe (137) von dem Klappgehäuse (121) aus in den Innenleerraum vorsteht und mit dem metallenen Verbindungsstück (135) in Kontakt kommt.

4. Mobilkommunikationssystem nach Anspruch 3, bei dem der Klappteil (120) ferner Folgendes umfasst:
ein Kontaktelement (139) zum Bereitstellen einer Federkraft für das metallene Verbindungsstück (135) und zum Inkontaktbringen des metallenen Verbindungsstücks (135) mit dem Scharniermodul (133), wobei das Kontaktelement (139) in einem Leerraum angeordnet ist, der definiert wird, wenn das metallene Verbindungsstück (135) gebogen wird, und wobei das Kontaktelement (139) mit der Kontaktrippe (137) beziehungsweise dem Scharniermodul (133) in Kontakt kommt.

5. Mobilkommunikationssystem nach Anspruch 2, bei dem der Klappteil (120) ferner Folgendes umfasst:
eine Fixierrippe (141) zum Fixieren des Displaymoduls (123) in dem Innenleerraum, wobei die Fixierrippe (141) von dem Klappgehäuse (121) aus in den Innenleerraum vorsteht und mit dem Displaymodul (123) in Kontakt kommt.

6. Mobilkommunikationssystem nach Anspruch 2, bei dem der Klappteil (120) ferner Folgendes umfasst:
eine Anschlussdichtung (143) zum elektrischen Verbinden des Displaymoduls (123) mit dem metallenen Verbindungsstück (135), wobei die Anschlussdichtung (143) zwischen dem Displaymodul (123) und dem metallenen Verbindungsstück (135) angeordnet ist und das Displaymodul (123) mit dem metallenen Verbindungsstück (135) verbindet.

## Revendications

1. Système de communication mobile comprenant :
une partie pliante (120) comprenant un module d'affichage (123) ;
une partie principale (110) comprenant un module principal (113) ayant une partie de masse ; et
un module d'articulation (133), installé contre la partie pliante (120) et couplé avec faculté de pivotement à la partie principale (110), servant ainsi à permettre à la partie pliante (120) de tourner pour se rapprocher ou s'éloigner de la partie principale (110) ;
dans lequel le module d'affichage (123) et le module principal (113) sont connectés électriquement l'un à l'autre et la partie de masse du module principal (113) met électriquement à la masse le module d'affichage (123) ; et
dans lequel le module d'affichage (123) est connecté électriquement au module d'articulation (133), le module d'articulation (133) étant mis à la masse au niveau de la partie de masse du module principal (113) par l'intermédiaire des connexions électriques respectives entre le module d'articulation et le module d'affichage et entre le module d'affichage et le module principal.

2. Système de communication mobile selon la revendication 1, dans lequel la partie pliante (120) comprend en outre :
un boîtier pliant (121) comprenant un espace interne vide pour recevoir le module d'affichage (123) ; et
un connecteur métallique (135) pour assurer la connexion électrique entre le module d'affichage (123) et le module d'articulation (133) dans l'espace interne vide.

3. Système de communication mobile selon la revendication 2, dans lequel la partie pliante (120) comprend en outre :
une nervure de contact (137) pour mettre en contact le connecteur métallique (135) avec le module d'articulation (133), la nervure de contact (137) saillant du boîtier pliant (121) vers l'espace interne vide et faisant contact avec le connecteur métallique (135).

4. Système de communication mobile selon la revendication 3, dans lequel la partie pliante (120) comprend en outre :
un élément de contact (139) pour fournir une force élastique au connecteur métallique (135) et mettre en contact le connecteur métallique (135) avec le module d'articulation (133), l'élément de contact (139) étant placé dans un espace vide défini quand le connecteur métallique (135) est fléchi et dans lequel l'élément de contact (139) fait contact respectivement avec la nervure de contact (137) et le module d'articulation (133).

5. Système de communication mobile selon la revendication 2, dans lequel la partie pliante (120) comprend en outre :
une nervure fixe (141) pour fixer le module d'affichage (123) dans l'espace vide interne, la nervure fixe (141) saillant du boîtier pliant (121) vers l'espace interne vide et la nervure fixe (141) faisant contact avec le module d'affichage (123).

6. Système de communication mobile selon la revendication 2, dans lequel la partie pliante (120) comprend en outre :
un joint de connexion (143) pour connecter électriquement le module d'affichage (123) au connecteur métallique (135), le joint de connexion (143) étant placé entre le module d'affichage (123) et le connecteur métallique (135) et le joint de connexion (143) connectant le module d'affichage (123) et le connecteur métallique (135).
